# EUROPÄISCHE PATENTSCHRIFT

(11) **EP 4 192 675 B1**
(45) Veröffentlichungstag und Bekanntmachung des Hinweises auf die Patenterteilung: **17.04.2024**
(21) Anmeldenummer: 21736982.6
(22) Anmeldetag: 17.06.2021
(51) Int. Cl.: B29C 65/70, B29C 65/00, B29C 65/60, C03C 15/00, B29C 65/64, B29C 65/44, B01L 3/00, B29C 65/08, B29C 65/16, C03C 23/00, C03C 27/00

(54) **VERFAHREN ZUR HERSTELLUNG VON KUNSTSTOFFTEILEN MIT GLASEINSATZ UND KUNSTSTOFFTEILE MIT GLASEINSATZ**
METHOD FOR MANUFACTURING PLASTIC PARTS WITH GLASS INSERT AND PLASTIC PARTS WITH GLASS INSERT
PROCÉDÉ DE FABRICATION DE PIÈCES EN PLASTIQUE AVEC INSERT EN VERRE ET PIÈCES EN PLASTIQUE AVEC INSERT EN VERRE

(30) Priorität: 04.08.2020 DE 102020209825
(43) Veröffentlichungstag der Anmeldung: 14.06.2023
(73) Patentinhaber: LPKF Laser & Electronics SE, 30827 Garbsen (DE)
(72) Erfinder: KRÜGER, Robin, 30419 Hannover (DE); OSTERMANN, Oktavia, 30419 Hannover (DE); RÖSENER, Bernd, 32457 Porta Westfalica (DE); SCHULZ-RUHTENBERG, Malte, 31515 Wunstorf (DE); OSTHOLT, Roman, 30855 Langenhagen (DE); JAUS, Tobias, 90455 Nürnberg (DE); KOLOSSOWSKI, Anna, 90766 Fürth (DE)
(74) Vertreter: Taruttis, Stefan Georg
(86) Internationale Anmeldenummer: PCT/EP2021/066449
(87) Internationale Veröffentlichungsnummer: WO 2022/028761

(56) Entgegenhaltungen:
- EP-A1- 0 212 656
- ES-T3- 2 331 003
- US-A1- 2009 305 397
- US-A1- 2018 127 694

## Beschreibung

Die vorliegende Erfindung betrifft ein Verfahren zur Herstellung von Kunststoffteilen, die einen Glaseinsatz aufweisen, indem vorgefertigte Kunststoffteile mit einem Glaseinsatz verbunden werden, z.B. entlang einer Ausnehmung des Kunststoffteils, so dass der Glaseinsatz die Ausnehmung überdeckt. Die Verbindung des Kunststoffteils mit dem Glaseinsatz erfolgt ohne einen Zusatzwerkstoff, z.B. ohne Klebstoff und ohne Dichtungsmasse. Das Kunststoffteil bildet mit dem Glaseinsatz einen Verbindungsbereich, in dem das Kunststoffteil formschlüssig, flüssigkeitsdicht und ohne Zusatzwerkstoff mit dem Glaseinsatz verbunden ist.

In bevorzugter Ausführungsform sind zumindest zwei Glaseinsätze als Abschnitte integral in einer einstückigen Glasplatte enthalten und überdecken jeweils eine Ausnehmung des Kunststoffteils.

Das Verfahren hat den Vorteil, dass die Kunststoffteile vorgefertigt sind und entsprechend z.B. kein Spritzguß im Verfahren erfolgt, der direkt auf Glas einwirken könnte.

### Stand der Technik

Die Die US 2018/0127694 A1 beschreibt, dass brüchige Membranen Mikrostrukturen aufweisen sollen, in die aufgeschmolzener Kunststoff eines Membranträgers eindringen soll. Die Membranen, die aus Keramik oder Glas bestehen können, weisen ausschließlich Sacklöcher oder Vorsprünge als Mikrostrukturen auf, die mit dem aufgeschmolzenen Material in Eingriff treten sollen.

Die EP 0212656 A1 beschreibt das Verbinden von Kunststoff mit einem daran anliegenden anderen Material, indem in dem anderen Material eine Bohrung vorliegt, durch die eine Glassonde gegen den Kunststoff gedrückt wird, während durch die Glassonde geleitete Laserstrahlung den Kunststoff erwärmt. Durch das gleichzeitige Erwärmen des Kunststoffs und Eindrücken der Glassonde durch die Bohrung in dem anderen Material hindurch in den Kunststoff wird der Kunststoff nach dem Erweichen verdrängt und tritt durch die Bohrung des anderen Materials, so dass der verdrängte Kunststoff das andere Material am Rand der Bohrung umfassen kann.

Die ES 2 331003 bzw. die zugrundeliegende EP 1577378 B1 beschreibt eine Vielzahl von Reaktionsräumen, in den jeweils ein Elektrodenpaar einen Spalt einschließt, wie es für die Elektroporation bekannt ist. Dabei können streifenförmig angeordnete Behältnisse in einen Rahmen 17 eingeklickt werden.

Die US 2009/0305397 A1 beschreibt zum Kultivieren von Embryos, Eizellen oder anderen Zellen eine Vorrichtung aus Kunststoff, z. B. PDMS oder porösem gesinterten Polypropylen, wobei elektrische Kontaktbleche an einem Deckel, der eine Mehrzahl von Näpfen überdeckt, angebracht sein können, und die Leitbleche durch federnde Kontaktstifte kontaktiert werden können.

Die US 9,236, 274 B1 beschreibt das Ablagern von Metall in Durchgangslöchern in Glasplatten.

Die CN 201288133 Y beschreibt ausweislich einer Computerübersetzung das Verbinden zweier Glasplatten miteinander.

Die US 2016/0165727 A1 beschreibt das Einschließen elektrischer Bauteile zwischen zwei plattenförmigen Trägern, die durch einen Rahmen beabstandet sind, mit einem umfänglichen Dichtring. Dieser umfängliche Dichtring soll formschlüssig mit den beiden Platten in Eingriff stehen.

Die US 2016/0052202 A1 beschreibt das Erzeugen von Hinterschneidungen in Glas durch Laserbestrahlung und das anschließende Verbinden mit Metallen oder Kunststoffen, die in die Hinterschneidung eingebracht werden.

Die DE 10 2019 201 350 A1, die nach dem Prioritätstag der vorliegenden Anmeldung veröffentlicht ist, beschreibt das Herstellen eines Glas-Kunststoff-Verbunds durch Einbringen flüssigen Kunststoffs in Ausnehmungen in Glas.

Die US 2016/0221254 A1 beschreibt das Aufbringen einer Verbindungsschicht aus Kunststoff mittels Spritzgießen direkt auf Glas, das eine poröse Oberfläche hat, mit anschließendem Verschweißen der Verbindungsschicht mit einem weiteren Teil, z.B. aus Kunstharz.

Die DE 101 55 312 A1 beschreibt das Verbinden zweier Werkstücke, von denen eines Durchgangslöcher hat und das andere passend ausgerichtete Löcher mit Hinterschneidungen, durch Ausfüllen der Durchgangslöcher und Hinterschneidungen mit Kunststoff.

### Aufgabe der Erfindung

Der Erfindung stellt sich die Aufgabe, ein alternatives Verfahren zur Herstellung von Kunststoffteilen anzugeben, die einen Glaseinsatz aufweisen, sowie mit dem Verfahren herstellbare Kunststoffteile, die einen Glaseinsatz aufweisen. Dabei sollen die Kunststoffteile vorgefertigt sein und das Verfahren soll ohne Spritzguß am Glaseinsatz durchführbar sein. Bevorzugt sollen die mit dem Verfahren herstellbaren Kunststoffteile keine zugängliche Klebstoffschicht zwischen Glaseinsatz und Kunststoff aufweisen. Weiter bevorzugt soll das Kunststoffteil mit Glaseinsatz kein flüchtiges Lösungsmittel aufweisen.

### Beschreibung der Erfindung

Die Erfindung löst die Aufgabe mit den Merkmalen der Ansprüche und stellt insbesondere ein Verfahren zur Herstellung von Kunststoffteilen bereit, die jeweils zumindest einen Glaseinsatz oder mehrere Glaseinsätze aufweisen, wobei jeder Glaseinsatz entlang eines Verbindungsbereichs mit dem Kunststoffteil verbunden ist und jeder Glaseinsatz in dem vom Verbindungsbereich umfassten Bereich frei von Kunststoff ist. Der von Kunststoff freie Bereich, der vom Verbindungsbereich umfasst ist, kann vorliegend auch als Glasfenster bezeichnet werden. Der Verbindungsbereich des Glaseinsatzes ist bevorzugt umfänglich geschlossen, z.B. umfänglich geschlossen und direkt angrenzend an das umfasste Glasfenster angeordnet. Das Glasfenster ist bevorzugt eine freie Glasfläche, alternativ kann das Glasfenster mit einer anderen Masse beschichtet sein, z.B. einem anderen Kunststoff oder Metall. Das Glasfenster kann Durchgangslöcher oder bevorzugt Ausnehmungen aufweisen, die sich nur über einen Anteil der Dicke des Glasfensters erstrecken und Mikrostrukturen aufweisen. Der Glaseinsatz ist bevorzugt vollständig eben und weist im Verbindungsbereich , der die Durchgangslöcher aufweist, eine einheitliche Dicke auf.

Die als Stand der Technik zitierten Schriften geben keinen Anlass für das erfindungsgemäße Verfahren, ein vorgefertigtes Kunststoffteil, das einen Schweißsteg aufweist, durch Erwärmen und Pressen des Materials des Schweißstegs durch die Durchgangslöcher eines Anlagebereichs eines Glaseinsatzes hindurchtreten zu lassen, um einen Verbindungsbereich auszubilden, der einen von Kunststoff freien Bereich des Glaseinsatzes umfasst.

Das Glasfenster kann Durchgangslöcher aufweisen, die in das Glas geätzt sind und die die durch das Ätzen erzeugte Oberfläche, z.B. reine SiO₂-Gruppen, aufweist und insbesondere keine Beschichtung darauf aufweist. Alternativ können Durchgangslöcher im Glasfenster elektrische Leiter aufweisen, die sich durch die Durchgangslöcher erstrecken, eine organische Beschichtung, z.B. mit einem reaktiven Silan, z.B. eine mit Methylsilan, mit C₁- bis C₁₂-aliphatischen Gruppen, optional enthaltend eine Aminogruppe, zumindest einer Carbonsäuregruppe, die z.B. durch Reaktion mit einer organischen Silanverbindung (z.B. APTES) erzeugt sind. Elektrische Leiter können die Durchgangslöcher ausfüllen. Elektrische Leiter können durch Füllen der Durchgangslöcher des Glases, die im Bereich des späteren Glasfensters angeordnet sind, mit Metall oder einer Vorläufermasse für Metall und Erwärmen hergestellt werden. Bevorzugt werden mit Leitern verbundene Kontaktflächen auf der Oberfläche des Glasfensters erzeugt, die dem Kunststoffteil gegenüberliegt. Vorläufermassen für Metall können z.B. Kunststoff, Metallpartikel oder Metalloxidpartikel enthalten und der Glaseinsatz kann vor dem Anordnen gegen das Kunststoffteil auf eine Temperatur erwärmt werden, bei der Metallpartikel schmelzen und/oder Metalloxidpartikel zu elektrisch leitendem Metall reduziert werden, ggf. in Gegenwart einer reduzierenden Atmosphäre.

Bevorzugt ist der Glaseinsatz in dem vom Verbindungsbereich umfassten Bereich, auch als Glasfenster bezeichnet, flüssigkeitsdicht, z.B. indem das Glasfenster keine Durchgangslöcher aufweist bzw. geschlossen ist, und optionale Durchgangslöcher flüssigkeitsdicht gefüllt sind, z.B. mit je einem elektrischen Leiter. Optional weist der Glaseinsatz zumindest eine ebene und in sich geschlossene Oberfläche auf, oder beide der einander gegenüberliegenden Oberflächen sind eben und in sich geschlossen.

Optional weist der Glaseinsatz in dem vom Verbindungsbereich umfassten Bereich Ausnehmungen auf, die sich nur über einen Anteil der Dicke des Glaseinsatzes erstrecken, so dass die Tiefe der Ausnehmungen in den Glaseinsatz nur einen Anteil von dessen Dicke beträgt und daher die Ausnehmungen einen einstückig in dem Glasträger ausgebildeten Boden aufweisen.

Generell bevorzugt werden Durchgangslöcher und optionale Ausnehmungen, die sich nur über einen Anteil der Dicke des Glaseinsatzes erstrecken, durch punktförmiges Bestrahlen des Glaseinsatzes mit Laserstrahlung und anschließendem Ätzen erzeugt. Das punktförmige Einstrahlen von Laserstrahlung wird durch Fokussieren der Laserstrahlung auf einen Punkt mit einer Größe von wenigen Mikrometern, z.B. 1 bis 10 µm oder bis 5 µm, erzielt. Dabei ist es vorteilhaft, wenn der Fokus der Laserstrahlung sich über eine Länge entlang der Ausbreitungsrichtung des Laserstrahls erstreckt, die wesentlich größer ist als die Rayleigh-Länge eines entsprechenden Laserstrahls mit Gauß-Profil. Dies kann durch geeignete optische Einrichtungen, z.B. diffraktiv-optische Elemente, erreicht werden. Das Einstrahlen kann ein Durchstrahlen sein, oder ein Einstrahlen weniger tief bis in einen an die erste Oberfläche angrenzenden ersten Dickenabschnitt des Glaseinsatzes erfolgen, z.B. dadurch, dass sich der Fokus der Laserstrahlung in Richtung der Ausbreitungsrichtung der Laserstrahlung nicht über die gesamte Dicke des Glaseinsatzes erstreckt. Da eine Wechselwirkung zwischen Laserstrahlung und Material der Glasplatte nur im Fokus stattfindet, ist es so möglich, den Wechselwirkungsbereich innerhalb der ersten Glasplatte enden zu lassen. Bevorzugt besteht die Laserstrahlung aus Laserpulsen.

Optional wird eine erste Oberfläche des Glaseinsatzes nicht beschichtet und eine zweite Oberfläche des Glaseinsatzes durchgängig mit Ätzresist beschichtet, um die Ausbildung von Ausnehmungen von der zweiten Oberfläche entlang der eingestrahlten Laserstrahlen zu verhindern. Damit kann ebenso die Form des Querschnitts der Ausnehmungen verändert werden, z.B. zu einem V-förmig oder kegelstumpfförmig zulaufenden Querschnitt. Alternativ kann der Laserstrahl beim Einstrahlen gesteuert sein, dass die Intensität nur ausreicht, um einen Anteil der Dicke des Glaseinsatzes durchqueren, um den Glaseinsatz entlang des Lichtpfads zu modifizieren, z.B. dadurch, dass der Abstand der Fokuslage relativ zur ersten Oberfläche des Glaseinsatzes eingestellt wird.

Generell optional ist beim Ätzen die zweite Oberfläche des Glaseinsatzes durchgängig mit Ätzresist beschichtet, um die Ausbildung von Ausnehmungen von der zweiten Oberfläche entlang der eingestrahlten Laserstrahlen zu verhindern. Damit kann ebenso die Form des Querschnitts der Ausnehmungen verändert werden, z.B. zu einem V-förmig oder kegelstumpfförmig zulaufenden Querschnitt. Alternativ kann der Laserstrahl beim Einstrahlen gesteuert sein, dass die Intensität nur ausreicht, um einen Anteil der Dicke des Glaseinsatzes durchqueren, um den Glaseinsatz entlang des Lichtpfads zu modifizieren, z.B. dadurch, dass der Abstand der Fokuslage relativ zur ersten Oberfläche des Glaseinsatzes eingestellt wird.

Der Durchmesser der Ausnehmungen bzw. der Durchgangslöcher ist durch die Reaktionsbedingungen und die Dauer des Ätzens einstellbar, da das Ätzen konzentrisch um den linearen Pfad erfolgt, den der eingestrahlte Laserstrahl durch den Glaseinsatz genommen hat. Die Wände, die zwischen Ausnehmungen, insbesondere zwischen Durchgangslöchern im Anlagebereich angeordnet sind, enden in einer gemeinsamen Ebene. Die Endflächen dieser Wände liegen in einer gemeinsamen Ebene und bilden die erste Oberfläche bzw. bilden in einer gemeinsamen Ebene die erste Oberfläche, wobei die erste Oberfläche von den Ausnehmungen unterbrochen ist. Die erste Oberfläche wird bevorzugt nur von den Querschnitten der Ausnehmungen unterbrochen.

Der Laserstrahl ist bevorzugt an jeder der Stellen, an denen er auf den Glaseinsatz eingestrahlt wird, gepulst, z.B. mit einer Wellenlänge von 1064 nm, bevorzugt mit Pulslängen von maximal 100 ps oder maximal 50 ps, bevorzugt maximal 10 ps. Generell ist der Laser eingerichtet, dass der Laserstrahl zwischen den Stellen, an denen eine Ausnehmung bzw. ein Durchgangsloch geätzt werden soll, nicht auf den Glaseinsatz trifft. Bevorzugt wird der Laserstrahl punktförmig und senkrecht auf die Oberfläche des Glaseinsatzes eingestrahlt. Bevorzugt bildet diese Oberfläche, auf die der Laserstrahl eingestrahlt wurde, die erste Oberfläche des Glaseinsatzes. Das Ätzen erfolgt z.B. mit Flusssäure, z.B. 1 bis 48 Gew.-%, und/oder Schwefelsäure und/oder Salzsäure und/oder Phosphorsäure und/oder Salpetersäure, oder Kalilauge, bei z.B. bis zu 140°C.

Der Glaseinsatz kann z.B. eine Dicke vor dem Ätzen von bis zu 1000 µm, bevorzugt 100 bis 1000 µm, z.B. bis 800 µm, z.B. 300 bis 500 µm aufweisen, nach dem Ätzen eine um 50 bis 700 µm geringere Dicke, z.B. eine bis 200 µm geringere Dicke.

Optional wird das Ätzen des Glaseinsatzes beendet, wenn sich die Ausnehmungen im Glasfenster nur über einen Anteil der Dicke des Glaseinsatzes erstrecken, so dass die Tiefe der Ausnehmungen in den Glaseinsatz im Glasfenster nur einen Anteil von dessen Dicke beträgt und daher die Ausnehmungen einen einstückig im Glaseinsatz ausgebildeten Boden aufweisen.

Die Ausnehmungen erstrecken sich bevorzugt in einem Winkel von z.B. 0° bis 15° kegel- oder kegelstumpfförmig zulaufend und von der Oberfläche der ersten Glasplatte ausgehend in deren Volumen.

Optional kann generell der Glaseinsatz ohne eine Beschichtung, z.B. ohne Maske und/oder ohne Ätzresist, dem Ätzen unterzogen werden, so dass das Verfahren den Vorteil hat, ohne Auftragen und ohne Entfernen von Ätzresist von dem Glaseinsatz durchgeführt zu werden. Generell bleibt zumindest die erste Oberfläche des Glaseinsatzes ohne Ätzresist und ohne Maske und wird ohne Ätzresist geätzt.

Generell optional wird die zweite Oberfläche des Glaseinsatzes vollständig mit Ätzresist beschichtet, optional nur im Bereich des Glasfensters, so dass das Ätzen nur von der ersten Oberfläche her erfolgt, oder der Laser, der den Laserstrahl einstrahlt, ist eingerichtet, dass der Laserstrahl nur einen Anteil der Dicke des Glaseinsatzes im Bereich des Glasfensters durchquert, bzw. dass der Laserstrahl im Glasfenster innerhalb der Dicke des Glaseinsatzes endet. In dieser Ausführungsform wird optional jede Stelle des Glaseinsatzes im Bereich des Glasfensters, an denen eine Ausnehmung erzeugt werden soll, an mehreren voneinander beabstandeten Positionen, z.B. an zumindest 3 oder zumindest 10 oder zumindest 30 Positionen, mit Laserstrahlen punktförmig bestrahlt, wobei die Laserstrahlen bevorzugt parallel zueinander und senkrecht auf das Glasfenster eingestrahlt werden, nacheinander oder gleichzeitig. Die Positionen bilden die Stelle, an der das Ätzen den Glaseinsatz schneller abträgt, als an davon entfernten Oberflächenbereichen. Die Positionen, an denen der Laser eingestrahlt wurde, führen beim Ätzen zu einem gleichmäßig schnellen Abtrag des Glases und bilden optional gemeinsam eine Ausnehmung. Die Positionen, die im Bereich einer Stelle eingestrahlt werden und eine Stelle bilden, sind z.B. in einem Abstand von 1 bis 10 µm angeordnet. Bevorzugt sind die Positionen innerhalb des Bereichs um jede Stelle angeordnet, in dem jeweils eine Ausnehmung gebildet werden soll. Bevorzugt sind die Positionen, an denen Laserstrahlen um eine Stelle oder zur Ausbildung einer Stelle eingestrahlt werden, in einem Abstand von 1 bis 10 µm, z.B. 2 bis 5 µm oder bis 3 µm, der insbesondere in der Ebene der ersten Oberfläche des Glaseinsatzes bestimmt ist.

Generell kann eine Ausnehmung durch einen einzelnen Laserpuls oder mehrere Laserpulse erzeugt werden. Bei einem einzelnen Laserpuls wird der Durchmesser der Ausnehmung vornehmlich durch die Ätzdauer bestimmt. Bei der Erzeugung einer Ausnehmung mit mehreren Laserpulsen wird der Durchmesser der Ausnehmung von Anzahl und Abstand der Positionen bestimmt, an denen Laserstrahlen für eine Stelle eingestrahlt werden und im Bereich des Glasfensters in den Glaseinsatz eindringen. Die Tiefe der Ausnehmung in das Volumen des Glaseinsatzes kann durch die Zeitdauer des Ätzens bestimmt werden und dadurch, dass der Laserstrahl nur zu einem Anteil in den Glaseinsatz eindringt bzw. den Glaseinsatz nicht vollständig durchstrahlt.

In dieser Ausführungsform kann der Boden der Ausnehmungen im Glasfenster Mikrostrukturen aufweisen, die für eine Nahfeldbeleuchtung des Innenvolumens der Ausnehmungen eingerichtet sind. Solche Mikrostrukturen können z.B. die Form von schmalen, hohen Glasspitzen haben und so als Lichtwellenleiter für die Beleuchtung fungieren oder einzelne Zellen bzw. Ansammlungen von Zellen in ihrer Lage oder Position beeinflussen. Solche Strukturen können hergestellt werden, indem z.B. eine Ausnehmung durch das Aufätzen einer Vielzahl von Positionen, an denen eng beabstandet Laserpulse eingestrahlt wurden, gebildet wird. Wird in der Mitte der Ausnehmung ein einzelner Laserpuls ausgelassen, so bleibt nach dem Ätzprozess hier eine Glasspitze innerhalb der Ausnehmung stehen. Generell kann im Verfahren eine Ausnehmung durch Einstrahlen von Laserpulsen nebeneinander an Positionen und anschließendes Ätzen erzeugt werden, wobei die Positionen in jeweils gleichen Abständen voneinander von maximal 10 µm, z.B. 1 bis 5 µm oder bis 3 µm angeordnet sind und zusammen eine Stelle bilden, wobei zumindest 2 oder zumindest 3 Positionen in einem größeren Abstand angeordnet sind, z.B. in einem Abstand von 10 bis 30 µm, z.B. 15 bis 20 µm Abstand. Die zumindest 2 oder 3 Positionen der Laserpulse, die in einem größeren Abstand angeordnet sind, weisen zwischen sich z.B. den Bereich auf, in dem ein Laserpuls im gleichen Abstand ausgelassen ist, bzw. umgeben den Bereich, in dem beim Ätzen eine Glasspitze stehenbleibt.

Generell können Laserpulse an Positionen, die eine Stelle bilden, an der durch Ätzen eine Ausnehmung gebildet wird, bis in unterschiedliche Tiefen in den Glaseinsatz eingestrahlt werden. So können z.B. Laserpulse an Positionen im Bereich des Glasfensters tiefer in die Dicke des Glaseinsatzes eingestrahlt werden und tiefer eindringen und andere Laserpulse an Positionen weniger tief in die Dicke des Glaseinsatzes eingestrahlt werden. Beim anschließenden Ätzen werden an den Positionen, an denen Laserpulse tiefer in des Glaseinsatz eingestrahlt wurden, tiefere bzw. weitere Ausnehmungen gebildet, und an den Positionen, an denen Laserpulse weniger tief in des Glaseinsatz eingestrahlt wurden, wird der Boden der Ausnehmung in geringerer Tiefe gebildet. Generell kann, abhängig vom Abstand der Positionen, an jeder Position eine konkave Vertiefung im Boden gebildet werden. Eine Ausnehmung, die einen Boden und darin weitere tiefere Ausnehmungen aufweist, kann durch Einstrahlen von Laserpulsen in dem Teil der Positionen, die den Boden bilden sollen, bis weniger tief in den Glaseinsatz und Einstrahlen von Laserpulsen in dem Teil der Positionen, die weitere Ausnehmungen, die sich ausgehend von dem Boden tiefer in die erste Glasplatte erstrecken sollen, bis tiefer in den Glaseinsatz und anschließendes Ätzen hergestellt werden. Für einen größeren Durchmesser weiterer Ausnehmungen, die sich im Bereich des Glasfensters ausgehend vom Boden einer Ausnehmung tiefer in den Glaseinsatz erstrecken, können Laserpulse, die tiefer in den Glaseinsatz eingestrahlt werden, an benachbarten Positionen, z.B. in einem Abstand von 1 bis 10 µm, z.B. 2 bis 5 oder bis 3 µm angeordnet sein, so dass an diesen Positionen das Ätzen im Bereich des Glasfensters tiefer in den Glaseinsatz eindringt. So können an einem Teil der Positionen Laserpulse weniger tief in das Glasfenster eingestrahlt werden, und an einem Teil der Positionen Laserpulse tiefer in das Glasfenster eingestrahlt werden, so dass beim Ätzen an den Positionen, an denen die Laserpulse weniger tief eingestrahlt wurden, ein Boden mit konkaven Vertiefungen in geringerer Tiefe erzeugt wird und an den Positionen, an denen Laserpulse tiefer eingestrahlt wurden, weitere Ausnehmungen erzeugt werden, die sich im Bereich des Glasfensters tiefer in den Glaseinsatz erstrecken.

In dieser Ausführungsform zur Herstellung von Glaseinsätzen, die im Bereich des Glasfensters, das vom Verbindungsbereich umfasst wird, Ausnehmungen aufweisen, die sich nur bis in einen Anteil der Dicke des Glaseinsatzes erstrecken und keine Durchgangslöcher bilden, wird das Ätzen für eine Zeitdauer durchgeführt, die zum Erreichen einer gewünschten Tiefe der Ausnehmungen im Glasvolumen des Glasfensters ausreicht, die in einem Abstand von der zweiten Oberfläche liegt, bzw. nur für eine Zeitdauer geätzt wird, nach der der Glaseinsatz noch eine geschlossene zweite Oberfläche aufweist. Optional kann dabei der Boden der Ausnehmungen konkave Vertiefungen aufweisen, die einen parabel- oder kegelförmigen Querschnitt aufweisen. Solche konkaven Vertiefungen können an jeder Position gebildet werden, an der ein Laserstrahl punktförmig eingestrahlt wurde. Bevorzugt weisen solche konkaven Vertiefungen eine Querschnittsöffnung und eine Tiefe von wenigen Mikrometern, z.B. 1 bis 5 µm auf.

Die Ausnehmungen im Bereich des Glasfensters weisen z.B. eine Tiefe von zumindest 40 µm, zumindest 50 µm oder zumindest 100 µm oder zumindest 150 µm auf, z.B. bis 250 µm oder bis 200 µm. Die Ausnehmungen weisen z.B. einen Durchmesser von zumindest 10 µm oder zumindest 30 µm auf, z.B. bis 200 µm oder bis 1 mm, generell bevorzugt mit eine Streckungsverhältnis von Tiefe zu Durchmesser von zumindest 2, zumindest 4, zumindest 5 oder zumindest 6 auf. Die Ausnehmungen im Bereich des Glasfensters haben z.B. ein Innenvolumen innerhalb des Glaseinsatz von 1 pL bis 1 µL.

Ausnehmungen im Bereich des Glasfensters, die sich nur über einen Anteil der Dicke des Glaseinsatzes erstrecken und Mikrostrukturen bilden, haben z.B. innerhalb des Glasfensters einen flachen Boden, der sich etwa parallel und in einem Abstand zu der Oberfläche (geschlossene zweite Oberfläche) des Glaseinsatzes erstreckt, die der Ausnehmung gegenüberliegt, oder einen V-förmigen Querschnitt, bevorzugt rotationssymmetrisch kegelförmig, der sich zu einem spitzen Boden verjüngt, oder, bevorzugt bei großem Streckungsverhältnis, einen sich mit zunehmender Tiefe im Glaseinsatz verjüngenden Querschnitt, der in einen zulaufenden Boden, kegelförmig oder rund oder bogenförmig konkav, übergeht. Das große Streckungsverhältnis ist z.B. ein Streckungsverhältnis von Tiefe zu Durchmesser, gemessen in der Ebene der ersten Oberfläche, von der sich die Ausnehmung in den Glaseinsatz erstreckt, von zumindest 2, zumindest 4, zumindest 5 oder zumindest 6. Die Ausnehmungen haben z.B. ein Innenvolumen innerhalb des Glaseinsatzes von 1 pL bis 1 µL. Generell haben Mikrostrukturen einen mit zunehmender Tiefe im Glaseinsatz zulaufenden Querschnitt.

Das Verfahren weist die Schritte
- Bereitstellen eines Kunststoffteils, das zumindest einen in einer Ebene liegenden Schweißsteg aufweist, der bevorzugt eine Ausnehmung in dem Kunststoffteil umfasst und der optional umfänglich geschlossenen ist,
- Bereitstellen zumindest eines Glaseinsatzes, der zumindest einen umfänglich geschlossenen Anlagebereich aufweist, in dem beabstandet angeordnete Durchgangslöcher angeordnet sind und der eine zum Schweißsteg passende Form und Größe aufweist oder aus in dem Anlagebereich angeordneten, voneinander beabstandeten Durchgangslöchern besteht,
- Anordnen des Glaseinsatzes mit dem zumindest einen Anlagebereich passend an den zumindest einen Schweißsteg des Kunststoffteils,
- Erwärmen des Schweißstegs und Pressen des zumindest einen Anlagebereichs des Glaseinsatzes gegen den zumindest einen Schweißsteg des Kunststoffteils zur Herstellung eines Verbindungsbereichs, in dem Kunststoff ausschließlich im Anlagebereich aufliegt und durch die Durchgangslöcher des Glaseinsatzes hindurchgetreten ist, und der Verbindungsbereich einen von Kunststoff freien Bereich des Glaseinsatzes umfasst,
auf oder besteht daraus.

Bevorzugt ist der Schweißsteg einstückig an dem Kunststoffteil ausgebildet und der Schweißsteg umfasst eine Ausnehmung in dem Kunststoffteil. Die Ausnehmung kann in einer Ebene gegenüber dem Schweißsteg offen sein und eine Durchgangsöffnung bilden, oder sie kann gegenüber und in einem Abstand zum Schweißsteg geschlossen sein und z.B. ein Sackloch in dem Kunststoffteil bilden. Bevorzugt wird die vom Schweißsteg umfasste Ausnehmung des Kunststoffteils von dem von Kunststoff freien Bereich des Glaseinsatzes, auch als Glasfenster bezeichnet, überdeckt und der Verbindungsbereich umfasst die Ausnehmung. Bevorzugt bildet der Kunststoff des Schweißstegs mit dem Anlagebereich des Glaseinsatzes den Verbindungsbereich, und das vom Verbindungsbereich umfasste Glasfenster überdeckt die vom Verbindungsbereich umfasste Ausnehmung des Kunststoffteils. Generell ist ein Schweißsteg ein Bereich am Kunststoffteil, bevorzugt ein mit dem Kunststoffteil einstückig ausgebildeter Bereich, der vorsteht und ein Volumen aufweist, das im erwärmten Zustand durch die Durchgangslöcher des Anlagebereichs hindurchtritt und den Verbindungbereich bildet, und optional nach Austreten auf der dem Kunststoffteil gegenüberliegenden Oberfläche des Glaseinsatzes eine plattgedrückte Schicht bildet. Ein Schweißsteg kann über eine Fläche des Kunststoffteils hervorstehen, die z.B. nach Erwärmen des Schweißstegs und Ausbilden des Verbindungsbereichs aus dem Schweißsteg am Glaseinsatz anliegt.

Der Glaseinsatz weist eine einheitliche Dicke auf, z.B. im Bereich von 100 bis 1000 µm, bevorzugt 200 bis 500 µm, z.B. 350 bis 450µm.

Das Herstellungsverfahren hat den Vorteil, dass im Verbindungsbereich Kunststoff, der durch die Durchgangslöcher des Anlagebereichs hindurchgetreten ist, auf der Oberfläche des Glaseinsatzes gegenüber dem Kunststoffteil Vorsprünge, bevorzugt eine plattgedrückte Schicht aus Kunststoff auf dem Glaseinsatz ausbildet. Denn solche Vorsprünge bzw. eine daraus durch Plattdrücken erzeugte Schicht aus Kunststoff bildet einen Abstandshalter zum Glaseinsatz, so dass beim Abstellen des Kunststoffteils mit dem Glaseinsatz einer ebenen Unterlage zugewandt, der Glaseinsatz nicht direkt auf der Unterlage aufliegt. Dabei kann die Schicht aus Kunststoff, die einen Abstandshalter zum Glaseinsatz auf der Glasoberfläche gegenüber dem Kunststoffteil bildet, dadurch hergestellt werden, dass Kunststoff, der auf der dem Kunststoffteil gegenüberliegenden Oberfläche des Glaseinsatzes durch Durchgangslöcher austritt, zu einer Schicht plattgedrückt wird, die sich bis in eine gemeinsame Ebene in einem Abstand von der Oberfläche des Glaseinsatzes erstreckt.

Der Glaseinsatz wird bevorzugt beim Anordnen seiner Anlagebereiche gegen den Schweißsteg des Kunststoffteils und beim Pressen dagegen in einer Ebene angeordnet. Entsprechend ist der Glaseinsatz bzw. das zumindest eine vom Glaseinsatz gebildete Glasfenster einschließlich seines Anlagebereichs in einer Ebene angeordnet, insbesondere nicht gebogen.

Die durch das Verfahren erzeugte Verbindung des Glaseinsatzes mit dem Kunststoffteil besteht entlang des Verbindungsbereichs ausschließlich daraus, dass Kunststoff des Schweißstegs nach dem Erwärmen verfestigt ist und ausschließlich in dem Anlagebereich am Glaseinsatz anliegt und sich durch die Durchgangslöcher des Glaseinsatzes erstreckt. Es hat sich gezeigt, dass der so ausgebildete Verbindungsbereich, der aus dem Kunststoff des Schweißstegs und dem Anlagebereich des Glaseinsatzes besteht, ohne zusätzlichen Werkstoff, z.B. ohne Klebstoff, flüssigkeitsdicht ist. Daher besteht der Verbindungsbereich aus Kunststoff des Kunststoffteils, insbesondere aus dem Kunststoff des Schweißstegs, der durch die Durchgangslöcher des Anlagebereichs des Glaseinsatzes hindurchgetreten ist, und dem Anlagebereich des Glaseinsatzes.

Optional werden an ein Kunststoffteil, das bevorzugt einstückig ist, das zumindest zwei umfänglich geschlossene Schweißstege aufweist, an jedem Schweißsteg jeweils ein Glaseinsatz mit seinem Anlagebereich passend zum Schweißsteg angeordnet und durch Erwärmen des Schweißstegs und Pressen des Glaseinsatzes mit seinem Anlagebereich gegen den Schweißsteg zur Herstellung eines Verbindungsbereichs mit dem Kunststoffteil verbunden.

Generell können zumindest zwei Glaseinsätze, jedes mit einem umfänglich geschlossenen Anlagebereich, in dem voneinander beabstandete Durchgangslöcher angeordnet sind, als Abschnitte in einer einstückigen Glasplatte enthalten sein. In dieser Ausführungsform wird eine einstückige Glasplatte, die als Abschnitte zumindest zwei Glaseinsätze mit jeweils einem Anlagebereich enthält, gegen ein Kunststoffteil oder zumindest zwei Kunststoffteile angeordnet, von denen jedes zumindest einen Schweißsteg, bevorzugt für jeden Anlagebereich einen Schweißsteg aufweist, wobei jeweils ein Anlagebereich passend zu einem Schweißsteg angeordnet wird. Beim anschließenden Erwärmen des Schweißstegs, bevorzugt aller Schweißstege gleichzeitig, und Pressen der Glasplatte gegen das eine Kunststoffteil oder gegen zumindest zwei Kunststoffteile werden jeweils Verbindungsbereiche aus den Anlagebereichen und Schweißstegen hergestellt. Anschließend kann optional die Glasplatte und/oder das eine oder die zumindest zwei Kunststoffteile zwischen benachbarten Verbindungsbereichen in Abschnitte geschnitten werden, die jeweils zumindest ein Kunststoffteil und zumindest einen Glaseinsatz aufweisen und durch zumindest einen Verbindungsbereich miteinander verbunden sind. Generell bevorzugt ist das zumindest eine Kunststoffteil und der zumindest eine Glaseinsatz ausschließlich durch zumindest einen Verbindungsbereich miteinander verbunden, der daraus besteht, dass Kunststoff von Schweißstegen an dem Anlagebereich des Glaseinsatzes anliegt und sich durch die Durchgangslöcher des Anlagebereichs erstreckt, bevorzugt bis über die dem Kunststoffteil gegenüberliegende Oberfläche des Glaseinsatzes, wobei weiter bevorzugt das Kunststoffteil einstückig ist.

Generell sind Glaseinsätze, die als Abschnitte in einer einstückigen Glasplatte enthalten sind, integrale Bereiche der Glasplatte. Generell kann der Anlagebereich, der umfänglich geschlossen ist und mit einem Schweißsteg jeweils einen Verbindungsbereich um eine Ausnehmung des Kunststoffteils bildet und ein Glasfenster über der Ausnehmung bildet, als erster Anlagebereich bezeichnet werden.

Generell kann das Kunststoffteil zumindest einen Fuß aufweisen, der über die Ebene hinausragt, in der der Schweißsteg am dem Kunststoffteil angesetzt ist, zuzüglich der Dicke des Glaseinsatzes und der Höhe des Kunststoffs, der im Verbindungsbereich aus den Durchgangslöchern des Glaseinsatzes gegenüber dem Kunststoffteil ausgetreten ist. Der Fuß ist bevorzugt einstückig mit dem Kunststoffteil ausgebildet. Weiter bevorzugt bildet der Fuß eine um das Kunststoffteil umlaufende Kante.

In einer Ausführungsform weist das Kunststoffteil zumindest 2, z.B. 96, 384 oder ein Vielfaches davon Ausnehmungen auf, jede mit einem einstückig ausgebildeten Schweißsteg, und eine gleiche Anzahl Glaseinsätze, jedes mit einem Anlagebereich bzw. ersten Anlagebereich, ist in zumindest einer, bevorzugt in genau einer einstückigen Glasplatte als Abschnitte enthalten, und weiter bevorzugt weist das Kunststoffteil einen zweiten, entlang seiner umfänglichen Außenkante verlaufenden Schweißsteg auf und die Glasplatte weist entlang ihrer umfänglichen Außenkante einen zweiten Anlagebereich auf, in dem voneinander beabstandete zweite Durchgangslöcher angeordnet sind. Die zumindest eine Glasplatte wird mit den Anlagebereichen der als integrale Abschnitte enthaltenen Glaseinsätze passend zu den Schweißstegen des Kunststoffteils angeordnet, und mit ihrem zweiten Anlagebereich passend zu dem entlang der umfänglichen Außenkante verlaufenden zweiten Schweißsteg des Kunststoffteils. Beim Erwärmen der Schweißstege und Pressen der Glasplatte gegen das Kunststoffteil wird in dieser Ausführungsform zusätzlich zu den einzelnen Verbindungsbereichen der Glaseinsätze ein zweiter Verbindungsbereich aus dem zweiten Anlagebereich und dem zweiten Schweißsteg hergestellt. Dabei können die Durchgangslöcher im zweiten Anlagebereich einen größeren Durchmesser und/oder größere Abstände voneinander haben, als die Durchgangslöcher der ersten Anlagebereiche. Bevorzugt enthalten zweite Schweißstege mehr Kunststoff pro Länge als erste Schweißstege.

Bevorzugt wird im zweiten Verbindungsbereich der durch die zweiten Durchgangslöcher hindurchtretende Kunststoff entlang zweiter Anlagebereiche gegen die Glasplatte gedrückt, weiter bevorzugt wird der hindurchtretende Kunststoff um die umlaufende Außenkante der Glasplatte herum geformt, bis der Kunststoff zumindest die umlaufende äußere Querschnittsfläche der Glasplatte abdeckt.

Die zweiten Durchgangslöcher, die in dem entlang der Außenkante laufenden zweiten Anlagebereich angeordnet sind, können denselben Durchmesser wie die Durchgangslöcher im Anlagebereich aufweisen, vorzugsweise weisen die zweiten Durchgangslöcher größere Durchmesser auf, z.B. um zumindest eine Faktor von 1,5 oder zumindest 2 größer als die Durchgangslöcher im Anlagebereich. Bevorzugt weist der zweite Schweißsteg ein größeres Volumen auf als die Schweißstege, die passend zu den Anlagebereichen angeordnet werden. Generell kann jeder Schweißsteg aus genau einem Schweißsteg oder aus zumindest zwei Teilschweißstegen bestehen, die z.B. parallel zueinander verlaufen. Ein Schweißsteg bzw. Teilschweißsteg kann z.B. um 0,1 mm bis 1 mm oder bis 0,5 mm über eine angrenzende Ebene des Kunststoffteil vorstehen, die z.B. eine Ausnehmung in dem Kunststoffteil umfasst. Optional kann ein Schweißsteg oder Teilschweißsteg Unterbrechungen aufweisen.

Generell bevorzugt werden alle Schweißstege gleichzeitig erwärmt. Das Erwärmen der Schweißstege kann durch Bestrahlen mit einem Laser erfolgen, z.B. Einstrahlen von Laserstrahlung durch das Glas auf die Schweißstege. Alternativ kann das Erwärmen der Schweißstege durch Erwärmen des Glaseinsatzes, insbesondere der Glasplatte, z.B. in einem Ofen, und Pressen des erwärmten Glaseinsatzes bzw. der erwärmten Glasplatte gegen das Kunststoffteil erfolgen.

Das Plattdrücken von Kunststoff, der gegenüber dem Kunststoffteil durch erste und/oder zweite Durchgangslöcher austritt, kann mittels eines Stempels erfolgen, der bevorzugt eingerichtet ist, solchen Kunststoff in einen vorbestimmten Abstand von dem Glaseinsatz und optional vom Glasfenster weg zu bewegen und optional eingerichtet ist, das Glasfenster abzudecken.

Schweißstege, optional das ganze Kunststoffteil, sind z.B. aus Polystyrol, Polypropylen, Polyurethan oder Polycarbonat. Optional besteht das Kunststoffteil einstückig aus Kunststoff, der gefärbt sein kann, der für optische Strahlung undurchlässig ist.

Durchgangslöcher werden bevorzugt dadurch erzeugt, dass ein Glaseinsatz mit Laserimpulsen an den Stellen behandelt wird, an denen Ausnehmungen erzeugt werden sollen, und anschließend das Glas geätzt wird. Denn Laserimpulse erzeugen Modifikationen, z.B. strukturelle Veränderungen, im Glas, die beim anschließenden Ätzen schneller aufgelöst werden, als nicht laserbestrahlte Bereiche. Für Glas sind Laserimpulse mit einer Wellenlänge geeignet, bei der das Glas eine hohe Transmission aufweist, beispielsweise eine Wellenlänge von 1064 nm, z.B. mit Impulslängen von maximal 100 ps oder von maximal 50 ps, bevorzugt maximal 10 ps. Die Laserquelle wird gepulst betrieben, der Laserstrahl wird abschnittsweise bzw. mit Unterbrechungen über das Glas bewegt. Über die Impulsfrequenz und die Bewegungsgeschwindigkeit des Laserstrahls über den Glasträger wird der Abstand der auf das Glas eingestrahlten Impulse eingestellt.

Die Durchgangslöcher im Glas, von denen optional zumindest ein Teil gegeneinander geneigt bzw. nicht zueinander parallel ist und/oder die gegen die Senkrechte geneigt sind, die sich zwischen den gegenüberliegenden und parallelen Oberflächen des Glases erstrecken, können durch Behandeln des Glases mit Laserimpulsen in einem Winkel von kleiner als 90° zur Oberfläche und anschließende Ätzen erzeugt werden. Die Durchgangslöcher durch das Glas, die gegeneinander geneigt und nicht parallel sind, sind zur Herstellung eines Glas-Kunststoff-Verbunds geeignet, der den Verbindungsbereich bildet.

Das Glas ist flach und hat z.B. vor dem Bestrahlen mit Laserimpulsen und vor dem Ätzen z.B. eine Dicke von bis zu 800 µm, bevorzugt 100 bis 800 µm, z.B. 300 bis 500 µm, nach dem Ätzen z.B. eine um 50 bis 700 oder bis 200 µm geringere Dicke und Durchgangslöcher in den laserbestrahlten Bereichen. Bei der Herstellung der Durchgangslöcher mittels Laserimpulsen und anschließendem Ätzen können solche Durchgangslöcher im Wesentlichen zylindrisch sein, z.B. mit geringem Winkel, z.B. von 3° bis 15° kegelförmig von der Oberfläche des Glases in das Glasvolumen zulaufend. Die Durchgangslöcher können durch die Dicke des Glaseinsatzes einen Querschnitt mit Sanduhrform aufweisen, bei dem der Durchmesser entlang der Dicke des Glaseinsatzes zur Mitte hin abnimmt, z.B. trichterförmig, und sich ab der Mitte bis zur gegenüberliegenden Oberfläche trichterförmig verbreitert. Dadurch wird ein Bereich geringsten Querschnitts der Ausnehmung innerhalb der Dicke des Glaseinsatzes gebildet. Dieser Bereich geringsten Querschnitts bildet eine bevorzugte Hinterschneidung. Dabei kann die Steigung der Trichterform jeweils etwa linear verlaufen.

Die Durchgangslöcher können z.B., gemessen in der Ebene einer Oberfläche des Glaseinsatzes, einen Querschnitt im Bereich von 10 µm bis 1 mm, z.B. von 20 oder von 50 µm bis 800 µm oder bis 700 µm, bis 600 µm, bis 500 µm, bis 400 µm oder 300 µm oder bis 200 µm oder bis 100 µm, jeweils +50 µm und/oder -50 µm, aufweisen. Generell bevorzugt weisen Glaseinsätze im Anlagebereich eine Vielzahl von Durchgangslöchern auf, z.B. zumindest 10 zumindest 20, zumindest 100 oder zumindest 200 Ausnehmungen, z.B. über jeweils eine Strecke von zumindest 1 cm oder zumindest 2 cm, z.B. über 2 bis 20 cm oder bis 10 cm. Generell können Ausnehmungen in einem Abstand von 0,2 bis 2 mm angeordnet sein, z.B. über eine Strecke von zumindest 1 cm oder zumindest 2 cm, z.B. über 2 bis 20 cm oder bis 10 cm.

Die Durchgangslöcher weisen bevorzugt innerhalb der Dicke des Glaseinsatzes zumindest eine Hinterschneidung auf. Optional kann eine zusätzliche Hinterschneidung von der Oberfläche gebildet sein, gegenüber der das Kunststoffteil gegen den Glaseinsatz angeordnet ist.

Eine Hinterschneidung wird dadurch gebildet, dass sich die Durchgangslöcher innerhalb des Glaseinsatzes verbreitern, insbesondere in Richtung auf die Oberfläche des Glaseinsatzes verbreitern, die gegenüber der Oberfläche liegt, auf die das Kunststoffteil gepresst wird. Alternativ oder zusätzlich kann eine Hinterschneidung dadurch gebildet sein, dass sich die Durchgangslöcher verjüngen und anschließend verbreitern, z.B. jeweils kegelförmig. Kegelförmig zulaufende Durchgangslöcher, die sich von der Oberfläche in ein Glas erstrecken, werden durch Ätzen eines Glaseinsatzes entlang der mit Laserimpulsen bestrahlten Stellen gebildet, da die Ätzreaktion von der Glasoberfläche entlang der bestrahlten Stellen in das Glasvolumen fortschreitet und daher nahe der Glasoberfläche eine längere Einwirkzeit hat. Da die Ätzreaktion auf alle, bzw. auf beide gegenüberliegenden Oberflächen des Glaseinsatzes wirkt, ergibt sich ein von der Oberfläche des Glaseinsatzes zulaufender Querschnitt, z.B. bis zu einem minimalen Querschnitt, der zwischen den Oberflächen des Glaseinsatzes liegt und sich zur gegenüberliegenden Oberfläche verbreitert.

Die Durchgangslöcher sind z.B. in einem Abstand voneinander angeordnet, der zumindest 10 %, zumindest 20 % oder zumindest 50 % oder zumindest 200 % des Durchmessers der Durchgangslöcher, gemessen in der Ebene einer Oberfläche des Glaseinsatzes, beträgt. Der Abstand kann z.B. bis zum 20-Fachen oder bis zum 15-Fachen oder bis zum 10-Fachen, z.B. bis 200 % oder bis 100 % oder bis 50 % des Durchmessers eines der Durchgangslöcher, gemessen in der Ebene einer Oberfläche des Glaseinsatzes, betragen.

Der Schweißsteg kann z.B. aus einem Thermoplast bestehen, der auf eine Temperatur oberhalb seiner Glasübergangstemperatur oder oberhalb seiner Schmelztemperatur erwärmt ist. Das Erwärmen kann z.B. durch Laserbestrahlung des Schweißstegs und/oder durch Beaufschlagung mit Ultraschall, z.B. durch Ultraschallschweißen, erfolgen, optional gleichzeitig mit dem oder vor dem Pressen des Kunststoffteils gegen den Glaseinsatz. Alternativ kann der Kunststoff des Schweißstegs ein Duroplast sein, gegen den vor oder während seiner Aushärtung der Glaseinsatz gepresst wird. Optional kann die Aushärtung eines Duroplasten durch Bestrahlung, z.B. mit UV-Strahlung, die optional Laserstrahlung ist, gestartet werden.

Optional können zusätzlich Ultraschallschwingungen auf den Glaseinsatz und/oder auf den sich verfestigenden Kunststoff aufgebracht werden.

Es hat sich gezeigt, dass Thermoplasten oder härtbare Mischungen, die zu Duroplasten reagieren, eine hinreichend geringe Viskosität aufweisen können, um durch Kapillarkräfte und/oder beim Anpressen des Glaseinsatzes gegen das Kunststoffteil in Durchgangslöcher, die durch den Glaseinsatz hindurchgehen, gezogen zu werden, z.B. in Ausnehmungen, die einen Durchmesser von 5 bis 100 µm, z.B. 10 bis 20 µm aufweisen. Der Druck kann ein Überdruck sein, mit dem der sich verfestigende Kunststoff gegen den Glaseinsatz gepresst wird, und/oder Unterdruck, der von der dem Kunststoffteil gegenüberliegenden Oberfläche des Glaseinsatzes durch die Durchgangslöcher den Kunststoff des Schweißstegs in die Durchgangslöcher zieht. Optional wird der Kunststoff beim Pressen des Glaseinsatzes gegen das Kunststoffteil in die Durchgangslöcher eingepresst, bis der Kunststoff des Schweißstegs zumindest eine Hinterschneidung der Durchgangslöcher umfasst, bevorzugt bis der Kunststoff des Schweißstegs auf der dem Kunststoffteil des Glaseinsatzes gegenüberliegenden Oberfläche durch die Durchgangslöcher austritt.

Das Verfestigen des Kunststoffs kann z.B. durch Kühlen erfolgen, wenn der Kunststoff ein Thermoplast ist, oder durch reaktives Aushärten, wenn der Kunststoff ein Duroplast ist.

Es hat sich gezeigt, dass der Glas-Kunststoff-Verbund, der den Verbindungsbereich bildet, ein formschlüssiger Verbund ist, bei dem der Kunststoff auf der Oberfläche und in den Durchgangslöchern des Glaseinsatzes angeordnet ist. Die im Verbindungsbereich aufeinanderliegenden Oberflächen von Kunststoff und Glaseinsatz weisen selbst in geringen Abmessungen eine hinreichende Fläche auf, um flüssigkeitsdicht zu sein. Die durch das Glas gebildeten Durchgangslöcher haben den Vorteil, dass die innerhalb der Durchgangslöcher gebildeten Hinterschneidungen eine formschlüssige und flüssigkeitsdichte Verbindung mit dem darin eingebrachten Kunststoff ausbilden. Dabei kann generell der Kunststoff ein anderes Ausdehnungsverhalten bei Temperaturänderungen aufweisen als das Glas. Bei Ausdehnung des Kunststoffs in geringerem Maße als die des Glaseinsatzes zieht sich der Kunststoff bevorzugt stärker in die z.B. kegelförmigen Durchgangslöcher, bei Ausdehnung des Kunststoffs in größerem Maße als die des Glases presst sich der Kunststoff bevorzugt stärker senkrecht gegen die Wandung der z.B. kegelförmigen Durchgangslöcher.

Die Erfindung wird nun genauer mit Bezug auf die Figuren beschrieben, die schematisch in
- Fig. 1 A) bis D) im Querschnitt senkrecht zur Oberfläche Ausführungsformen von Ausnehmungen im Glasfenster des Glaseinsatzes,
- Fig. 2 A), B), C) weitere Ausführungsformen von Glaseinsätzen im Querschnitt senkrecht zur Oberfläche der ersten Glasplatte,
- Fig. 3 A) im Querschnitt einen Glaseinsatz, in B) den Glaseinsatz in verkleinerter Darstellung in Aufsicht,
- Fig. 4 ein Kunststoffteil im Querschnitt,
- Fig. 5 ein Kunststoffteil mit Glaseinsatz, und in
- Fig. 6 A) ein Kunststoffteil einer Ausführungsform und Fig. 6 B) eine Glasplatte mit einer Vielzahl darin enthaltener Glaseinsätze
   zeigen.

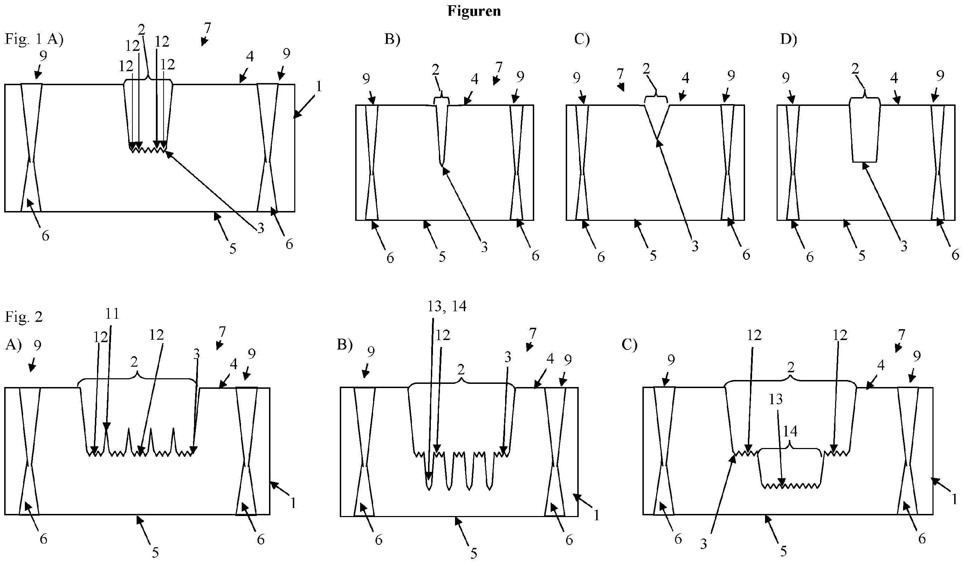

Die Fig. 1 A) zeigt in einem Glaseinsatz 1 eine Ausnehmung 2, die durch Ätzen eines Glaseinsatzes 1 im Bereich des Glasfensters 7 nach Einstrahlung eines gepulsten Laserstrahls herstellbar ist. Dabei zeigt der Boden 3 konkave Vertiefungen, die einen etwa parabelförmigen Querschnitt aufweisen. Solche konkaven Vertiefungen werden an jeder Position 12 gebildet, an der ein Laserstrahl punktförmig eingestrahlt wurde. Vorliegend ergibt sich ein Boden 3 mit konkaven Vertiefungen durch punktförmiges Einstrahlen von Laserstrahlen an Positionen 12 in Abständen, die dem Abstand der Mittelpunkte der Vertiefungen entsprechen. Durch das Ätzen, das im Anschluß an das Bestrahlen erfolgt, werden die Bereiche der ersten Glasplatte 1 zwischen den Positionen 12 entfernt. Für diese einstückige Ausführungsform kann der auf die erste Oberfläche 4 des Glaseinsatzes 1 eingestrahlte Laserstrahl eingerichtet sein, nur bis zu einem Anteil in das Volumen des Glaseinsatzes 1 einzudringen, und/oder die der ersten Oberfläche 4 gegenüberliegende zweite Oberfläche 5 kann vollflächig mit Ätzresist beschichtet sein. Entlang des Umfangs ist eine Reihe Durchgangslöcher 6 angeordnet, die einen Anlagebereich 9 bilden.

Die Fig. 1 B) zeigt eine Ausnehmung 2 mit großem Streckungsverhältnis mit einem sich mit zunehmender Tiefe im Glaseinsatz verjüngenden Querschnitt, der in einen zulaufenden Boden, kegelförmig oder rund, endet.

Die Fig. 1 C) zeigt eine Ausnehmung 2 mit V-förmigen Querschnitt, der rotationssymmetrisch kegelförmig oder gestreckt grabenförmig sein kann, der sich zu einem spitzen Boden verjüngt.

Die Fig. 1 D) zeigt eine Ausnehmung 2 mit flachem Boden, der sich etwa parallel und in einem Abstand zu der zweiten, geschlossenen Oberfläche 5 des Glaseinsatzes erstreckt, die der Ausnehmung gegenüberliegt.

Die Fig. 2 zeigt Ausführungsformen eines Glaseinsatzes, dessen Glasfenster 7 von Durchgangslöchern 6 umfasst wird, die einen Anlagebereich 9 bilden. In dem Glaseinsatz 1 ist eine Ausnehmung 2, die einstückig im Bereich des Glasfensters 7 hergestellt sind. Dies zeigt, dass das Einstrahlen von Laserpulsen auf die erste Oberfläche 4 des Glaseinsatzes an mehreren Positionen, die in einem Abstand von z.B. 1 bis 10 µm liegen und daher eine Stelle bilden, mit anschließendem Ätzen genau eine Ausnehmung 2 herstellt. Dabei kann durch das Ätzen an jeder Position 12 am Boden 3 der Ausnehmung 2 jeweils eine konkave Vertiefung 12 erzeugt sein.

Wie in Fig. 2 A) dargestellt, wird eine Glasspitze 11, die senkrecht zur ersten Oberfläche 4 vom Boden 3 in die Ausnehmung 2 ragt, beim Ätzen erzeugt, wenn zumindest 3 Positionen 12, an denen Laserpulse eingestrahlt werden, in größerem Abstand angeordnet sind, z.B. in einem Abstand von 20 µm. Dabei ergibt jede Position 12, an der ein Laserpuls eingestrahlt wurde, beim Ätzen eine konkave Vertiefung im Boden 3.

Die Fig. 2 B ) zeigt, dass Laserpulse, die an einzelnen Positionen 13 eingestrahlt werden und tiefer in die Dicke des Glaseinsatzes 1 eindringen, dort beim Ätzen weitere Ausnehmungen 14 gebildet werden, die sich tiefer in den Glaseinsatz 1 erstrecken, als die Vertiefung an anderen Positionen 12, in denen Laserpulse bis in eine geringere Tiefe in den Glaseinsatz 1 eingestrahlt wurden. Die Tiefe des Eindringens der Laserpulse in den Glaseinsatz 1 kann durch Einstellen der Fokuslage und/oder die Stärke der Pulsenergie der Laserpulse vorbestimmt werden.

Die Fig. 2 C) zeigt, dass das Einstrahlen von Laserpulsen, die tiefer in den Glaseinsatz 1 eindringen, an nebeneinander angeordneten Positionen 13 dort beim Ätzen eine weitere Ausnehmung 14 bilden, die sich tiefer in die Dicke des Glaseinsatzes 1 erstreckt, als die Ausnehmung, deren Boden 3 beim Ätzen von anderen Positionen 12 gebildet wird, an denen die Laserpulse weniger tief in den Glaseinsatz 1 eingestrahlt worden sind.

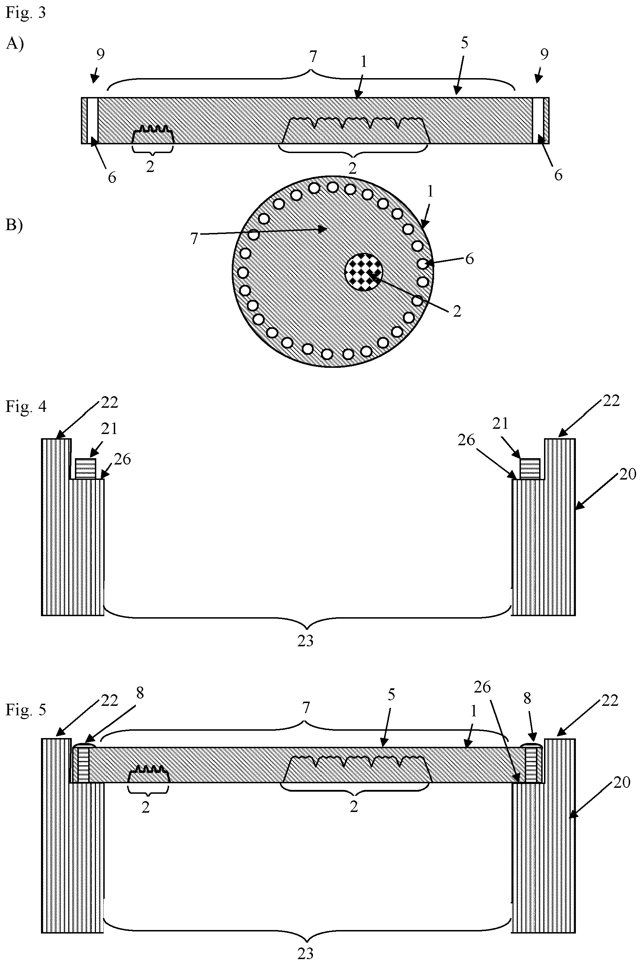

Die Fig. 3 zeigt einen Glaseinsatz 1, entlang dessen Umfang ein Anlagebereich 9 mit voneinander beabstandeten Durchgangslöchern 6 ausgebildet ist und in dem im Bereich des vom Anlagebereich 9 umfassten Glasfensters 7 beispielhafte Ausnehmungen 2 geätzt sind. Die beispielhaften Ausnehmungen 2 sind in Fig. 3 A) im Schnitt dargestellt, in Fig. 3 B) schematisch in Aufsicht.

Die Fig. 4 zeigt ein vorgefertigtes Kunststoffteil 20, das einen einstückig ausgebildeten Schweißsteg 21 aufweist, der von einem ebenfalls einstückig ausgebildeten Fuß 22 überragt wird, der um die Ausnehmung 23 umläuft. Die Ausnehmung 23 geht zumindest abschnittsweise, bevorzugt über ihren vollständigen Querschnitt, durch die Dicke des Kunststoffteils 20. Der Schweißsteg 21 ist, wie generell bevorzugt, umfasst die Ausnehmung 23 umfänglich. Weiter zeigt die Fig. 4, dass generell ein Schweißsteg 21 über eine Fläche 26 des Kunststoffteils 20 hervorstehen kann, die nach Erwärmen des Schweißstegs und die nach dem Ausbilden des Verbindungsbereichs 8 aus dem Material des Schweißstegs 21 am Glaseinsatz 1 anliegt. Generell bevorzugt liegt die Fläche 26 in einer Ebene, die in einem Abstand und parallel zu der Ebene liegt, in die sich ein Fuß 22 erstreckt.

Die Fig. 5 zeigt, dass nach Erwärmen des Schweißstegs 21 dessen Kunststoff durch die Durchgangslöcher 6 fließt und den Verbindungsbereich 8 ausbildet, mit dem der Anlagebereich 9 bzw. die Durchgangslöcher 6 des Glaseinsatzes 1 mit dem Kunststoffteil 20 formschlüssig verbunden ist. Die Ausnehmungen 2, die sich jeweils nur durch einen Anteil der Dicke des Glaseinsatzes 1 erstrecken, und entsprechend die erste Oberfläche 4 des Glaseinsatzes 1, von der sich die Ausnehmung 2 in den Glaseinsatz 1 erstreckt, sind der Ausnehmung 23 des Kunststoffteils zugewandt, und ist entsprechend von der Ausnehmung 23 bzw. deren Querschnittsöffnung zugänglich.

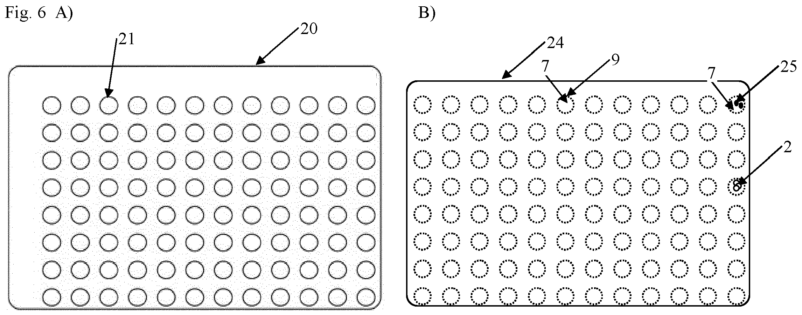

Die Fig. 6 A) zeigt ein Kunststoffteil, das einstückig ist und in 8 Reihen jeweils 12 durchgehende Durchbrechungen aufweist, von denen jede von einem umfänglichen Schweißsteg 21 umfasst ist. Die Fig. 6 B) zeigt eine einstückige Glasplatte mit einer Anordnung von Anlagebereichen 9, die aus hier kreisförmig angeordneten Durchgangslöchern bestehen. Die Anordnung der Anlagebereiche 9 und deren Größe entspricht der Anordnung und Größe der Schweißstege 21 des Kunststoffteils, so dass die Anlagebereiche 9 passend zu jeweils einen Schweißsteg 21 ausgerichtet und zur Herstellung der Verbindungsbereiche dagegen gepresst werden können. Die Glasplatte 24 weist eine einheitliche Dicke auf und enthält die Vielzahl Glaseinsätze in einem Stück, so dass von jedem Glaseinsatz 1 nur der aus Durchgangslöchern 6 bestehende Anlagebereich 9 und die optionalen, in dem vom Anlagebereich 9 umfassten Glasfenster 7 enthaltenen Ausnehmungen 2 bzw. Mikrostrukturen 2 oder von elektrischen Leitern ausgefüllte Durchgangslöcher 25 sichtbar sind.

## Patentansprüche

1. Verfahren zur Herstellung eines Kunststoffteils (20), das einen Glaseinsatz (1) aufweist, das die Schritte
- Bereitstellen eines vorgefertigten Kunststoffteils (20), das zumindest einen umlaufenden und in einer Ebene liegenden Schweißsteg (21) aufweist, der ein mit dem Kunststoffteil (20) einstückig ausgebildeter Bereich ist, der über eine Fläche des Kunststoffteils (20) vorsteht,
- Bereitstellen eines Glaseinsatzes (1), der zumindest einen umfänglich geschlossenen Anlagebereich (9) aufweist, in dem beabstandet angeordnete Durchgangslöcher (6) angeordnet sind und der eine zum Schweißsteg (21) passende Form und Größe aufweist,
- Anordnen des Glaseinsatzes (1) mit dem zumindest einen Anlagebereich (9) passend an jeweils einen Schweißsteg (21) des Kunststoffteils (20),
- Erwärmen des Schweißstegs (21) und Pressen des zumindest einen Anlagebereichs (9) des Glaseinsatzes (1) gegen den zumindest einen Schweißsteg (21) des Kunststoffteils (20) zur Herstellung eines Verbindungsbereichs (8), in dem Kunststoff ausschließlich im Anlagebereich (9) aufliegt und durch die Durchgangslöcher (6) des Glaseinsatzes (1) hindurchgetreten ist, wobei der Verbindungsbereich (8) aus Kunststoff des Kunststoffteils (20) und dem Glaseinsatz (1) besteht, und der Verbindungsbereich (8) einen von Kunststoff freien Bereich (7) des Glaseinsatzes (1) umfasst,
aufweist.

2. Verfahren nach Anspruch 1, **dadurch gekennzeichnet, dass** in den bereitgestellten Glaseinsatz in dem vom Anlagebereich (9) umfassten, von Kunststoff freien Bereich (7) zumindest eine Ausnehmung (2), die sich nur über einen Anteil der Dicke des Glaseinsatzes (1) erstreckt, durch punktförmiges Bestrahlen mit Laserstrahlung und anschließendes Ätzen erzeugt wird.

3. Verfahren nach einem der voranstehenden Ansprüche, **dadurch gekennzeichnet, dass** das Kunststoffteil (20) in dem vom umlaufenden Schweißsteg (21) umfassten Bereich eine durch das Kunststoffteil (20) durchgehende Ausnehmung (23) aufweist, die einseitig von dem von Kunststoff freien Bereich (7) des Glaseinsatzes (1) überdeckt wird.

4. Verfahren nach einem der Ansprüche 2 bis 3, **dadurch gekennzeichnet, dass** der Glaseinsatz (1) mit der zumindest einen Ausnehmung (2), die sich nur über einen Anteil der Dicke des Glaseinsatzes (1) erstreckt, der Ausnehmung (23) zugewandt wird, die durch das Kunststoffteil (20) durchgeht.

5. Verfahren nach Anspruch 4, **dadurch gekennzeichnet, dass** die Ausnehmungen (2) durch Einstrahlen von Laserpulsen auf den vom Anlagebereich (9) umfassten Bereich des Glaseinsatzes (1) und anschließendem Ätzen des Glaseinsatzes (1) erzeugt werden, bis die Ausnehmungen einen flachen Boden, der sich etwa parallel und in einem Abstand zu der zweiten Oberfläche (5) des Glaseinsatzes (1) erstreckt, die der Ausnehmung (2) gegenüberliegt, oder einen V-förmigen Querschnitt, der sich zu einem spitzen Boden verjüngt, oder bei großem Streckungsverhältnis einen sich mit zunehmender Tiefe im Glaseinsatz (1) verjüngenden Querschnitt, der in einen zulaufenden Boden, kegelförmig oder rund, übergeht.

6. Verfahren nach einem der voranstehenden Ansprüche, **dadurch gekennzeichnet, dass** das Kunststoffteil (20) den Schweißsteg (21) einstückig ausgebildet aufweist und einen einstückig ausgebildeten Fuß (22) aufweist, der den Schweißsteg (21) um zumindest die Dicke des Glaseinsatzes (1) überragt.

7. Verfahren nach einem der voranstehenden Ansprüche, **dadurch gekennzeichnet, dass** zumindest zwei Glaseinsätze (1) mit jeweils einem Anlagebereich (9) als integrale Abschnitte in einer einstückigen Glasplatte (24) enthalten sind, die gegen das Kunststoffteil (20) angeordnet wird, das für jeden Anlagebereich (9) einen Schweißsteg (21) aufweist, wobei jeweils ein Anlagebereich (9) passend zu einem Schweißsteg (21) angeordnet wird.

8. Verfahren nach einem der voranstehenden Ansprüche, **dadurch gekennzeichnet, dass** der von Kunststoff freie Bereich (7) des Glaseinsatzes (1) beidseitig ebene, geschlossene Oberflächen aufweist.

9. Verfahren nach einem der Ansprüche 1 bis 7, **dadurch gekennzeichnet, dass** der von Kunststoff freie Bereich (7) des Glaseinsatzes (1) Durchgangslöcher (25) aufweist, die von elektrischen Leitern ausgefüllt sind.

10. Verfahren nach einem der voranstehenden Ansprüche, **dadurch gekennzeichnet, dass** das Erwärmen des zumindest einen Schweißstegs (21) durch Erwärmen des Glaseinsatzes (1) und Pressen des zumindest einen Anlagebereichs (9) gegen den zumindest einen Schweißsteg (21) erfolgt.

11. Verfahren nach einem der voranstehenden Ansprüche, **dadurch gekennzeichnet, dass** das Glaseinsatz (1) flach ist, dass die Durchgangslöcher (6) durch Bestrahlen des Glaseinsatzes (1) mit Laserimpulsen und anschließendem Ätzen erzeugt werden und der Glaseinsatz (1) vor dem Bestrahlen mit Laserimpulsen und vor dem Ätzen eine Dicke von bis zu 800 µm und nach dem Ätzen eine um 50 bis 200 µm geringere Dicke und Durchgangslöcher (6) nur in den laserbestrahlten Bereichen aufweist.

12. Verfahren nach einem der Ansprüche 7 bis 11, **dadurch gekennzeichnet, dass** die Glasplatte einen entlang ihrer umfänglichen Außenkante verlaufenden zweiten Schweißsteg aufweist und die Glasplatte entlang ihrer umfänglichen Außenkante einen zweiten Anlagebereich aufweist, in dem voneinander beabstandete zweite Durchgangslöcher angeordnet sind, die Glasplatte mit den Anlagebereichen der als integrale Abschnitte enthaltenen Glaseinsätze passend zu den Schweißstegen des Kunststoffteils angeordnet wird, und mit ihrem zweiten Anlagebereich passend zu dem entlang der umfänglichen Außenkante verlaufenden zweiten Schweißsteg des Kunststoffteils (20) angeordnet wird, so dass beim Erwärmen der Schweißstege (21) und Pressen der Glasplatte (24) gegen das Kunststoffteil (21) zusätzlich zu den einzelnen Verbindungsbereichen (8) der Glaseinsätze (1) ein zweiter Verbindungsbereich aus dem zweiten Anlagebereich und dem zweiten Schweißsteg hergestellt wird.

13. Verfahren nach einem der voranstehenden Ansprüche, **dadurch gekennzeichnet, dass** Kunststoff, der auf der dem Kunststoffteil (20) gegenüberliegenden Oberfläche (5) des Glaseinsatzes (1) durch Durchgangslöcher (6) austritt, zu einer Schicht plattgedrückt wird, die sich bis in eine Ebene in einem Abstand von der Oberfläche (5) des Glaseinsatzes (1) erstreckt.

14. Verfahren nach einem der voranstehenden Ansprüche, **dadurch gekennzeichnet, dass** der Schweißsteg (21), ein Volumen aufweist, das im erwärmten Zustand durch die Durchgangslöcher (6) des Anlagebereichs hindurchtritt, und dass beim Pressen des zumindest einen Anlagebereichs (9) des Glaseinsatzes (1) gegen den zumindest einen Schweißsteg (21) des Kunststoffteils (20) der Kunststoff, der im Anlagebereich (9) aufliegt und durch die Durchgangslöcher (6) des Glaseinsatzes (1) hindurchgetreten ist, auf der Oberfläche des Glaseinsatzes (1) gegenüber dem Kunststoffteil (20) Vorsprünge ausbildet.

15. Kunststoffteil, das einen Einsatz aus Glaseinsatz aufweist, bei dem die Verbindung des Glaseinsatzes (1) mit dem Kunststoffteil (20) entlang eines Verbindungsbereichs (8), der sich um jeweils eine Ausnehmung (23) in dem Kunststoffteil (20) erstreckt, ausschließlich daraus besteht, dass der Kunststoff verfestigt und einstückig mit dem Kunststoffteil (20) ausgebildet ist und der Kunststoff ausschließlich in dem Verbindungsbereich (8) am Glaseinsatz (1) anliegt und sich durch im Verbindungsbereich (8) im Glaseinsatz (1) ausgebildete Durchgangslöcher (6) erstreckt und auf der Oberfläche des Glaseinsatzes (1) gegenüber dem Kunststoffteil (20) Vorsprünge ausbildet, und der Verbindungsbereich (8) einen von Kunststoff freien Bereich des Glaseinsatzes (1) umfasst, der beidseitig ebene, geschlossene Oberflächen (4, 5) aufweist.

16. Kunststoffteil nach Anspruch 15, **dadurch gekennzeichnet, dass** in dem von Kunststoff freien Bereich des Glaseinsatzes (1) zumindest eine Ausnehmung (2) angeordnet ist, die sich nur über einen Anteil der Dicke des Glaseinsatzes (1) erstreckt und die der Ausnehmung (23) in dem Kunststoffteil (20) zugewandt ist.

17. Kunststoffteil nach einem der Ansprüche 15 bis 16, **dadurch gekennzeichnet, dass** zumindest zwei Glaseinsätze (1), die in jeweils einem Verbindungsbereich (8) Durchgangslöcher (6) aufweisen, integral in einer einstückigen Glasplatte (24) enthalten sind, die entlang des Verbindungsbereichs (8) mit einem Kunststoffteil (20) verbunden ist, wobei die von Kunststoff freien Bereiche jeweils eine Ausnehmung (23) des Kunststoffteils (20) überdecken.

18. Kunststoffteil nach Anspruch 17, **dadurch gekennzeichnet, dass** die Glasplatte entlang ihrer umfänglichen Außenkante einen zweiten Anlagebereich mit voneinander beabstandeten zweiten Durchgangslöchern aufweist und das Kunststoffteil (20) entlang seiner umfänglichen Außenkante mit dem zweiten Anlagebereich einen zweiten Verbindungsbereich bildet, in dem einstückig mit dem Kunststoffteil (20) ausgebildeter Kunststoff anliegt, der sich durch die zweiten Durchgangslöcher bis auf die dem Kunststoffteil gegenüberliegende Oberfläche der Glasplatte erstreckt.

19. Kunststoffteil nach einem der Ansprüche 15 bis 18, **dadurch gekennzeichnet, dass** Kunststoff, der auf der dem Kunststoffteil (20) gegenüberliegenden Oberfläche des Glaseinsatzes (1) durch Durchgangslöcher (6) ausgetreten ist, zu einer Schicht plattgedrückt ist, die sich bis in eine Ebene in einem Abstand von der Oberfläche des Glaseinsatzes (1) erstreckt.

20. Kunststoffteil nach einem der Ansprüche 15 bis 19, **dadurch gekennzeichnet, dass** das Kunststoffteil (20) einen einstückig mit dem Kunststoffteil (20) ausgebildeten Fuß (22) aufweist, der entlang der umlaufenden Kante des Kunststoffteils (20) angeordnet ist und über den aus den Durchgangslöchern (6) des Glaseinsatzes (1) ausgetretenen Kunststoff hinausragt.

21. Kunststoffteil nach einem der Ansprüche 15 bis 20, **dadurch gekennzeichnet, dass** der Kunststoff, der sich durch im Verbindungsbereich (8) im Glaseinsatz (1) ausgebildete Durchgangslöcher (6) erstreckt, auf der Oberfläche des Glaseinsatzes (1) gegenüber dem Kunststoffteil (20) Vorsprünge ausbildet.

## Claims

1. Process for producing a plastic part (20) which has a glass insert (1), comprising the steps of
- providing a prefabricated plastic part (20), which has at least one circumferential welding web (21) lying in one plane, which welding web is an area formed integrally with the plastic part (20) and which projects beyond a surface of the plastic part (20),
- providing a glass insert (1) which has at least one circumferentially closed contact area (9) in which through-holes (6) are arranged at spaced intervals and which has a shape and size matching the welding web (21),
- arranging the glass insert (1) with the at least one contact area (9) to fit against a respective welding web (21) of the plastic part (20),
- heating the welding web (21) and pressing the at least one contact area (9) of the glass insert (1) against the at least one welding web (21) of the plastic part (20) to produce a connection area (8), in which plastic rests exclusively in the contact area (9) and has passed through the through-holes (6) of the glass insert (1), wherein the connecting area (8) consists of plastic of the plastic part (20) and the glass insert (1), and the connecting area (8) comprises an area (7) of the glass insert (1) which is free of plastic.

2. Process according to claim 1, **characterized in that** at least one recess (2) is produced by spot irradiation with laser radiation and subsequent etching which recess in the glass insert is provided in the area (7) free of plastic and surrounded by the contact area (9), which recess extends only over a portion of the thickness of the glass insert (1).

3. Process according to one of the preceding claims, **characterized in that** the plastic part (20) has a recess (23) passing through the plastic part (20) in the area surrounded by the circumferential welding web (21), which recess is covered on one side by the area (7) of the glass insert (1) that is free of plastic.

4. Process according to one of claims 2 to 3, **characterized in that** the glass insert (1) with the at least one recess (2), which extends only over a portion of the thickness of the glass insert (1), is facing the recess (23) which extends through the plastic part (20).

5. Process according to claim 4, **characterized in that** the recesses (2) are produced by irradiating laser pulses onto the area of the glass insert (1) encompassed by the contact area (9) and subsequently etching the glass insert (1) until the recesses have a flat base which extends approximately parallel to and at a distance from the second surface (5) of the glass insert (1), which is opposite the recess (2), or a V-shaped cross-section which tapers to a pointed base, or, in the case of a large aspect ratio, a cross-section which tapers with increasing depth in the glass insert (1) and merges into a tapered base, conical or round.

6. Process according to one of the preceding claims, **characterized in that** the plastic part (20) has the welding web (21) formed in one piece and has a foot (22) formed in one piece, which projects beyond the welding web (21) by at least the thickness of the glass insert (1).

7. method according to one of the preceding claims, **characterized in that** at least two glass inserts (1), each having a contact area (9), are contained as integral portions in a one-piece glass plate (24) which is arranged against the plastic part (20) which has a welding web (21) for each contact area (9), one contact area (9) being arranged to fit a welding web (21) in each case.

8. Process according to one of the preceding claims, **characterized in that** the area (7) of the glass insert (1) free of plastic has flat, closed surfaces on both sides.

9. Process according to one of claims 1 to 7, **characterized in that** the area (7) of the glass insert (1) which is free of plastic has through-holes (25) which are filled by electrical conductors.

10. Process according to one of the preceding claims, **characterized in that** the heating of the at least one welding web (21) takes place by heating the glass insert (1) and pressing the at least one contact area (9) against the at least one welding web (21).

11. Process according to one of the preceding claims, **characterized in that** the glass insert (1) is flat, **in that** the through-holes (6) are produced by irradiating the glass insert (1) with laser pulses and subsequent etching and the glass insert (1) has a thickness of up to 800 µm before irradiation with laser pulses and before etching and a thickness which is 50 to 200 µm less after etching and has through-holes (6) only in the laser-irradiated areas.

12. Process according to one of claims 7 to 11, **characterized in that** the glass plate has a second welding web running along its circumferential outer edge and the glass plate has a second contact area along its circumferential outer edge, in which second through-holes are arranged spaced apart from one another, the glass plate is arranged with the contact areas of the glass inserts contained as integral sections to match the welding webs of the plastic part, and is arranged with its second contact area matching the second welding web of the plastic part (20) extending along the circumferential outer edge, so that when the welding webs (21) are heated and the glass plate (24) is pressed against the plastic part (21), a second connecting area is produced from the second contact area and the second welding web in addition to the individual connecting areas (8) of the glass inserts (1).

13. Process according to one of the preceding claims, **characterized in that** plastic, which emerges through through-holes (6) on the surface (5) of the glass insert (1) opposite the plastic part (20), is pressed flat to form a layer which extends into a plane at a distance from the surface (5) of the glass insert (1).

14. Process according to one of the preceding claims, **characterized in that** the welding web (21) has a volume which, in the heated state, passes through the through-holes (6) of the contact area, and **in that**, when the at least one contact area (9) of the glass insert (1) is pressed against the at least one welding web (21) of the plastic part (20), the plastic, which rests in the contact area (9) and has passed through the through-holes (6) of the glass insert (1), forms projections on the surface of the glass insert (1) opposite the plastic part (20).

15. Plastic part, which has an insert made of glass insert, in which the connection of the glass insert (1) to the plastic part (20) along a connecting area (8), which extends around a respective recess (23) in the plastic part (20), consists exclusively of the plastic being solidified and formed in one piece with the plastic part (20) and the plastic rests against the glass insert (1) exclusively in the connecting area (8) and extends through through-holes (6) formed in the glass insert (1) in the connecting area (8) and forms projections on the surface of the glass insert (1) opposite the plastic part (20), and the connecting area (8) comprises an area of the glass insert (1) which is free of plastic and has flat, closed surfaces (4, 5) on both sides.

16. Plastic part according to claim 15, **characterized in that** at least one recess (2) is arranged in the area of the glass insert (1) which is free of plastic, which recess extends only over a portion of the thickness of the glass insert (1) and which faces the recess (23) in the plastic part (20).

17. Plastic part according to one of claims 15 to 16, **characterized in that** at least two glass inserts (1), each of which has through holes (6) in a connecting area (8), are integrally contained in a one-piece glass plate (24) which is connected to a plastic part (20) along the connecting area (8), wherein the areas free of plastic each cover a recess (23) in the plastic part (20).

18. Plastic part according to claim 17, **characterized in that** the glass plate along its circumferential outer edge has a second contact area with second through-holes spaced apart from one another and the plastic part (20) along its circumferential outer edge with the second contact area forms a second connecting area in which plastic adjoins, which is formed integrally with the plastic part (20), which plastic extends through the second through-holes to the surface of the glass plate opposite the plastic part.

19. Plastic part according to one of claims 15 to 18, **characterized in that** plastic which has emerged through through-holes (6) on the surface of the glass insert (1) opposite the plastic part (20) is pressed flat to form a layer which extends into a plane at a distance from the surface of the glass insert (1).

20. Plastic part according to one of claims 15 to 19, **characterized in that** the plastic part (20) has a foot (22) which is formed integrally with the plastic part (20), which foot is arranged along the circumferential edge of the plastic part (20) and projects beyond the plastic which has emerged from the through-holes (6) of the glass insert (1).

21. Plastic part according to one of claims 14 to 20, **characterized in that** the plastic, which extends through through-holes (6) formed in the connecting area (8) in the glass insert (1), forms projections on the surface of the glass insert (1) opposite the plastic part (20).

## Revendications

1. Procédé de fabrication d'une pièce en matière plastique (20) qui présente un insert en verre (1), comprenant les étapes suivantes
- préparation d'une pièce en matière plastique préfabriquée (20), qui présente au moins une barre de soudure (21) périphérique et située dans un plan, qui est une zone formée d'un seul tenant avec la pièce en matière plastique (20), qui fait saillie sur une surface de la pièce en matière plastique (20),
- mise à disposition d'un insert en verre (1) qui présente au moins une zone d'appui (9) fermée sur sa périphérie, dans laquelle sont disposés des trous de passage (6) espacés et qui présente une forme et une taille adaptées à la barre de soudure (21),
- disposition de l'insert en verre (1) avec l' au moins une zone d'appui (9) adaptée à chaque fois à une barre de soudure (21) de la pièce en plastique (20),
- chauffage de la barre de soudure (21) et pressage de la au moins une zone d'appui (9) de l'insert en verre (1) contre l' au moins une barre de soudure (21) de la pièce en matière plastique (20) pour la fabrication d'une zone de liaison (8) dans laquelle la matière plastique repose exclusivement dans la zone d'appui (9) et est passée à travers les trous de passage (6) de l'insert en verre (1), la zone de liaison (8) étant constituée de matière plastique de la pièce en matière plastique (20) et de l'insert en verre (1) et la zone de liaison (8) comprend une zone (7) de l'insert en verre (1) exempte de matière plastique.

2. Procédé selon la revendication 1, **caractérisé en ce qu'**au moins un évidement (2), qui ne s'étend que sur une partie de l'épaisseur de l'insert en verre (1), est réalisé dans l'insert en verre mis à disposition dans la zone (7) exempte de matière plastique et entourée par la zone d'appui (9), par une irradiation ponctuelle avec un rayonnement laser suivie d'une attaque chimique.

3. Procédé selon l'une des revendications précédentes, **caractérisé en ce que** la pièce en matière plastique (20) présente, dans la zone entourée par la barrette de soudure (21), périphérique un évidement (23) traversant la pièce en matière plastique (20), qui est recouvert d'un côté par la zone (7) de l'insert en verre (1) exempte de matière plastique.

4. Procédé selon l'une des revendications 2 à 3, **caractérisé en ce que** l'insert en verre (1) est tourné vers l'évidement (23) qui traverse la pièce en matière plastique (20), avec l'au moins un évidement (2) qui s'étend seulement sur une partie de l'épaisseur de l'insert en verre (1).

5. Procédé selon la revendication 4, **caractérisé en ce que** les évidements (2) sont créés en irradiant des impulsions laser sur la zone de l'insert en verre (1) entourée par la zone d'appui (9), puis en gravant l'insert en verre (1) jusqu'à ce que les évidements présentent un fond plat qui s'étend à peu près parallèlement et à une distance de la deuxième surface (5) de l'insert en verre (1), qui est opposée à l'évidement (2), ou une section transversale en forme de V qui se rétrécit en un fond pointu, ou, en cas de rapport d'étirement important, une section transversale qui se rétrécit avec l'augmentation de la profondeur dans l'insert en verre (1) et qui se transforme en un fond effilé, conique ou rond.

6. Procédé selon l'une des revendications précédentes, **caractérisé en ce que** la pièce en matière plastique (20) présente la barre de soudure (21) formée d'une seule pièce et présente un pied (22) formé d'une seule pièce qui dépasse la barre de soudure (21) d'au moins l'épaisseur de l'insert en verre (1).

7. Procédé selon l'une quelconque des revendications précédentes, **caractérisé en ce qu'**au moins deux inserts en verre (1) ayant chacun une zone d'appui (9) sont contenus en tant que sections intégrales dans une plaque de verre d'une seule pièce (24) qui est disposée contre la pièce en plastique (20) qui comporte une barre de soudure (21) pour chaque zone d'appui (9), une zone d'appui (9) étant disposée de manière à s'adapter à une barre de soudure (21).

8. Procédé selon l'une des revendications précédentes, **caractérisé en ce que** la zone (7) de l'insert en verre (1) exempte de matière plastique présente des surfaces planes et fermées des deux côtés.

9. Procédé selon l'une des revendications 1 à 7, **caractérisé en ce que** la zone (7) de l'insert en verre (1) exempte de matière plastique présente des trous de passage (25) qui sont remplis par des conducteurs électriques.

10. Procédé selon l'une des revendications précédentes, **caractérisé en ce que** le chauffage de ladite au moins une barre de soudure (21) est réalisé en chauffant l'insert en verre (1) et en pressant ladite au moins une zone d'appui (9) contre ladite au moins une barre de soudure (21).

11. Procédé selon l'une des revendications précédentes, **caractérisé en ce que** l'insert en verre (1) est plat, **en ce que** les trous traversants (6) sont produits par irradiation de l'insert en verre (1) avec des impulsions laser, suivie d'une attaque chimique, et **en ce que** l'insert en verre (1) présente, avant l'irradiation avec des impulsions laser et avant l'attaque chimique, une épaisseur allant jusqu'à 800 µm et, après l'attaque chimique, une épaisseur inférieure de 50 à 200 µm et des trous traversants (6) uniquement dans les zones irradiées au laser.

12. Procédé selon l'une des revendications 7 à 11, **caractérisé en ce que** la plaque de verre présente une deuxième barre de soudure s'étendant le long de son bord extérieur périphérique et la plaque de verre présente le long de son bord extérieur périphérique une deuxième zone d'appui dans laquelle sont disposés des deuxièmes trous de passage espacés l'un de l'autre, la plaque de verre est disposée avec les zones d'appui des inserts de verre contenus en tant que sections intégrales de manière adaptée aux barres de soudure de la pièce en plastique, et est disposée avec sa deuxième zone d'appui adaptée à la deuxième barre de soudage de la pièce en matière plastique (20) s'étendant le long du bord extérieur périphérique, de sorte que lors du chauffage des barres de soudage (21) et de la pression de la plaque de verre (24) contre la pièce en matière plastique (21), une deuxième zone de liaison est réalisée à partir de la deuxième zone d'appui et de la deuxième barre de soudage en plus des différentes zones de liaison (8) des inserts en verre (1).

13. Procédé selon l'une des revendications précédentes, **caractérisé en ce que** la matière plastique qui s'échappe par des trous de passage (6) sur la surface (5) de l'insert en verre (1) opposée à la partie en matière plastique (20) est aplatie en une couche qui s'étend jusqu'à un plan situé à une certaine distance de la surface (5) de l'insert en verre (1).

14. Procédé selon l'une des revendications précédentes, **caractérisé en ce que** la barre de soudure (21) présente un volume qui, à l'état chauffé, passe à travers les trous de passage (6) de la zone d'appui, et **en ce que**, lors du pressage de la au moins une zone d'appui (9) de l'insert en verre (1) contre la au moins une barre de soudage (21) de la partie en matière plastique (20), la matière plastique, qui repose dans la zone d'appui (9) et qui est passée à travers les trous de passage (6) de l'insert en verre (1), forme des saillies sur la surface de l'insert en verre (1) par rapport à la partie en matière plastique (20).

15. Pièce en matière plastique qui présente un insert en verre, dans laquelle la liaison de l'insert en verre (1) avec la pièce en matière plastique (20) le long d'une zone de liaison (8) qui s'étend respectivement autour d'un évidement (23) dans la pièce en matière plastique (20) est exclusivement constituée de celle-ci, en ce que la matière plastique est solidifiée et réalisée d'une seule pièce avec la partie en matière plastique (20) et la matière plastique s'applique exclusivement dans la zone de liaison (8) sur l'insert en verre (1) et s'étend à travers des trous de passage (6) réalisés dans la zone de liaison (8) dans l'insert en verre (1) et forme des saillies sur la surface de l'insert en verre (1) par rapport à la partie en matière plastique (20), et la zone de liaison (8) comprend une zone de l'insert en verre (1) exempte de matière plastique, qui présente des surfaces (4, 5) planes et fermées des deux côtés.

16. Pièce en matière plastique selon la revendication 15, **caractérisée en ce que** dans la zone de l'insert en verre (1) exempte de matière plastique est disposé au moins un évidement (2) qui s'étend seulement sur une partie de l'épaisseur de l'insert en verre (1) et qui est tourné vers l'évidement (23) dans la pièce en matière plastique (20).

17. Pièce en matière plastique selon l'une quelconque des revendications 15 à 16, **caractérisée en ce qu'**au moins deux inserts en verre (1), qui présentent des trous traversants (6) dans une zone de liaison (8) respective, sont contenus intégralement dans une plaque de verre monobloc (24) qui est reliée à une pièce en matière plastique (20) le long de la zone de liaison (8), les zones exemptes de matière plastique recouvrant chacune un évidement (23) de la pièce en matière plastique (20).

18. Pièce en matière plastique selon la revendication 17, **caractérisée en ce que** la plaque de verre présente, le long de son bord extérieur périphérique, une deuxième zone d'appui avec des deuxièmes trous de passage espacés les uns des autres et la pièce en matière plastique (20) forme, le long de son bord extérieur périphérique, avec la deuxième zone d'appui, une deuxième zone de liaison dans laquelle s'appuie de la matière plastique formée d'un seul tenant avec la pièce en matière plastique (20), qui s'étend à travers les deuxièmes trous de passage jusqu'à la surface de la plaque de verre opposée à la pièce en matière plastique.

19. Pièce en matière plastique selon l'une quelconque des revendications 15 à 18, **caractérisée en ce que** la matière plastique qui est sortie par des trous traversants (6) sur la surface de l'insert en verre (1) opposée à la pièce en matière plastique (20) est aplatie pour former une couche qui s'étend jusqu'à un plan situé à une certaine distance de la surface de l'insert en verre (1).

20. Pièce en matière plastique selon l'une des revendications 15 à 19, **caractérisée en ce que** la pièce en matière plastique (20) comporte un pied (22) formé d'un seul tenant avec la pièce en matière plastique (20), disposé le long du bord périphérique de la pièce en matière plastique (20) et dépassant de la matière plastique sortie des trous traversants (6) de l'insert en verre (1).

21. Pièce en matière plastique selon l'une quelconque des revendications 14 à 20, **caractérisée en ce que** la matière plastique, qui s'étend à travers des trous traversants (6) formés dans la zone de liaison (8) dans l'insert en verre (1), forme des saillies sur la surface de l'insert en verre (1) par rapport à la pièce en matière plastique (20) .
